# EUROPEAN PATENT SPECIFICATION

(11) **EP 3 105 840 B1**
(45) Date of publication and mention of the grant of the patent: **10.01.2018**
(21) Application number: 15710906.7
(22) Date of filing: 10.02.2015
(51) Int. Cl.: H02K 3/28, H02K 11/00, H02K 11/04, H02J 3/40, F02B 63/04, H02K 21/22, H02K 7/18

(54) **MOTOR GENERATOR AND SYSTEM FOR ELECTRICITY PRODUCTION**
MOTORGENERATOR UND SYSTEM ZUR PRODUKTION VON ELEKTRIZITÄT
MOTEUR-GÉNÉRATEUR ET SYSTÈME DE PRODUCTION D'ÉLECTRICITÉ

(30) Priority: 11.02.2014 IT TV20140024; 29.07.2014 IT TV20140114
(43) Date of publication of application: 21.12.2016
(73) Proprietor: IDM S.R.L., 31044 Montebelluna (IT)
(72) Inventor: IMOLI, Dante, I-31044 Montebelluna (IT); BORDIN, Mauro, I-31044 Montebellluna (IT)
(74) Representative: Piovesana, Paolo
(86) International application number: PCT/IB2015/050987
(87) International publication number: WO 2015/121792

(56) References cited:
- US-A1- 2010 181 851
- US-A1- 2012 293 004

## Description

The present invention relates to a motor generator and a system for electricity production.

Motor generators (or "electricity generating units") can be of various types, however all comprise an endothermic motor as their primary source of mechanical energy, and a system for converting the mechanical energy produced by said motor into electricity.

Traditional motor generators are configured to provide a precise voltage/current value as output and, in particular, to convert most of the mechanical energy developed by the endothermic motor into a precise and sole voltage/current value.

In greater detail, depending on their method of transforming the mechanical energy into electricity, traditional motor generators are divided into two main categories: those which use an electric machine consisting of a wound rotor and stator, and those which use permanent magnet alternators with relative electronic energy conversion units.

Traditional motor generators of the second type, i.e. with permanent magnet alternators, are able to provide as output both AC voltage (for example, 115VAC, 230VAC, 400VAC...) and DC voltage (for example 12VDC or 24VDC). However they are usually configured to provide a single voltage as output, corresponding substantially to the rated mechanical power obtainable from the endothermic motor.

In this respect, in the current state, in applications where motor generators having an AC or DC voltage output are required at different times, both at full motor piston displacement, a number of motor generators are required equal to the number of different output values.

This represents a drawback, in particular in those cases where final installation is in difficultly accessible places, as a plurality of motor generators have to be transported.

Moreover, in applications in which motor generators are used for domestic purposes (to integrate or replace the external electric mains connection), different motor generator outputs are required at different periods of the day, with each output having a power close to the rated power of the endothermic motor of the required motor generator.

In addition, given that the various loads of domestic user items require mutually different feed voltages (for example, household electrical appliances with traditional electric motors or pumps require an AC voltage feed, while lighting systems or modern televisions require a DC voltage feed), the user must provided several motor generators, programming the motor generator output as DC during one part of the day and AC during a different part of the day.

Furthermore, in applications in which both single-phase and three-phase feed of equal power are required, in the current state two different motor generators are required, one for single-phase feed and one for three-phase feed. Finally, those motor generators with a three-phase voltage output are particularly heavy and hence difficult to transport, especially if in isolated places.

US 2010/0181851 describes a motor generator consisting of a single integrated containment structure housing all the motor generator components.

In particular, the motor generator is able to generate an output of different types of electrical voltage because of the presence of a specific control unit which is commanded by the main motor generator controller and acts on the alternator such as to select and set different connections depending on the required output voltage. However, this solution is rather complicated constructionally, from both the mechanical and electronic viewpoints, and consequently particularly costly. Moreover, the fact of consisting of a single integrated containing structure does not facilitate transport, nor its adaptability for use in different contexts, particularly because it requires the use of output connectors and filters specifically certified for those countries in which the motor generator is sold. Finally, the setting of the different connections is final, and in any event must be set up or be modified only by the constructor, with evident limitations for the user if the characteristics of the generated electricity need to be modified due to changed utilization requirements.

WO 2012/061044 describes a portable power supply system connected to an internal combustion engine (ICE) generator. In particular, the ICE generator comprises an engine, a generic electric generator and a control module while the power supply system comprises an enclosure that houses a power supply module, a control module, a battery system and an inverter.

WO 2008/106447 discloses a portable power supply connected to a generator. In particular, the generator can be gas-engine and is provided with a protrusion for receiving the portable power supply and with latches for fiixedly attaching the portable power supply to generator. The portable power supply comprises an housing, a cable for connecting to an AC plug, outlets for connecting power tools, at least one battery pack to be disposed on the housing itself. In particular, the cable 104 is connected to a power supply circuit which provides power to a controlled that controls the current sources for charging battery packs.

An object of the invention is to provide an improved motor generator which is flexible and particularly usable in various applications.

Another object of the invention is to provide an improved motor generator which is easy and comfortable to transport.

Another object of the invention is to provide a motor generator which is economically advantageous both for the producer and for the final user.

Another object of the invention is to provide a motor generator having an output power always close to the rated mechanical power obtainable from the endothermic motor.

Another object of the invention is to provide a motor generator which enables the final user to be able to generate different types of output voltage without needing to purchase several complete motor generators.

Another object of the invention is to provide a motor generator of simple, quick and low-cost construction.

Another object of the invention is to provide an electricity production system able to provide either a three-phase or single-phase voltage as output.

These objects and others which will be apparent from the ensuing description are attained, according to the invention, by a motor generator as indicated in claim 1, and by an electricity production system, as indicated in claim 16.

The present invention is further clarified in the form of some preferred embodiments thereof with reference to the accompanying drawings, in which:
- Figure 1: shows schematically a motor generator according to the invention,
- Figure 2: shows schematically an example of a stator of the motor generator of Figure 1,
- Figure 3: shows schematically a first example of the interconnection between the stator windings and the electronics,
- Figure 4: shows schematically a second example of the interconnection between the stator windings and the electronics,
- Figure 5: shows schematically a first embodiment of a combined system for electricity production according to the invention,
- Figure 6: shows schematically an alternator of the system of Figure 5,
- Figure 7: shows schematically a second embodiment of a combined system for electricity production according to the invention,
- Figure 8: shows schematically an alternator of the system of Figure 7,
- Figure 9: shows a detail of the system of Figure 5 or 7 in the configuration arranged for supplying a single-phase voltage as the system output,
- Figure 10: shows the pattern and timing of the voltage and synchronization systems for generating a three-phase voltage as the system output,
- Figure 11: shows the pattern and timing of the voltage and synchronization systems for generating a single-phase voltage as the system output.

As can be seen from the figures, the motor generator 1 according to the invention comprises a first component 2 and a second component 10, which are arranged to be engaged and coupled together during normal operation of the motor generator.

The first component 2 comprises a first containment structure 100 housing internally a motor 4 and a permanent magnet multi-pole alternator 6, which is mechanically coupled to said motor.

By means of the end of its shaft 5, the motor 4 rotates the permanent magnet multi-pole alternator 6. An AC voltage/current is generated across the ends 31, 32 of the windings 30 of the alternator 6 which, via a suitable cable is transmitted to the first interconnection means 8. Essentially, the first interconnection means 8 are electrically connected to the windings 30 of the alternator 6.

Advantageously, further auxiliary electrical signals 7 are also fed to the first interconnection means 8, relative for example to velocity control or to switch-off of the endothermic motor 4, or relative to the control of the motor generator itself.

The second component 10 comprises a second containment structure 102, internally housing an electronic conversion system 14 provided with at least one output connector 16.

The second component 10 also comprises second interconnection means 12 mechanically couplable and electrically connectable to the first interconnection means 8 of the first component 2. In particular, the second interconnection means 12 are electrically connected by a suitable cable to the input of the electronic conversion system 14.

Preferably, the first interconnection means 8 and/or the second interconnection means 12 are accessible from the outside and are defined at the outer surface of the respective containment structure 100 and 102.

For example, the electronic conversion system 14 comprises at its input a rectifier bridge able to transform into DC voltage the three-phase voltage provided by the alternator 6 and DC-DC or DC-AC converter stages at the output.

The electricity (in the form of AC voltage/current) generated by the alternator 6 is transmitted by the first interconnection means 8 to the second interconnection means 12 and, in this manner, reaches the electronic conversion system 14, where it is suitably transformed into electricity of the desired characteristics, to be then made available to the user via the output connector 16.

In particular, the voltage generated by the alternator 6 (which is variable by depending on the periodicity of the rotations of the motor 4) can be converted by the electronic system 14 into a single-phase voltage of normal amplitude and frequency (for example 230 Vac 50Hz or 114 Vac 60Hz).

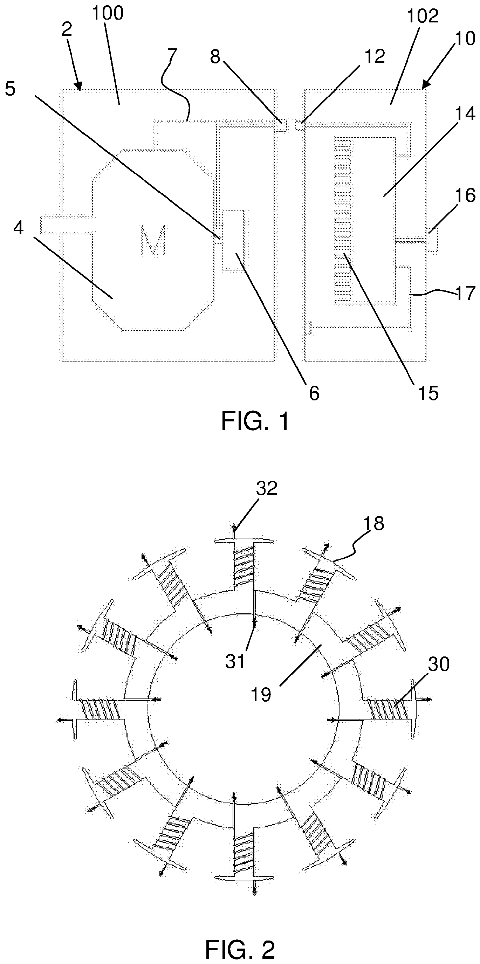

As represented in Figure 2, the stator 19 of the multi-pole permanent magnet alternator 6 comprises a plurality of windings 30 wound about the teeth 18 of the stator 19. Most of or all the windings 30 have their initial end 31 and/or their terminal end 32 connected electrically to the first electric contacts 20', 20" defined in said first interconnection means 8. In particular, the first electric contacts 20, 20" of said first interconnection means 8 are accessible from the outside of said first containment structure 100.

The second interconnection means 12 comprise second electric contacts 21', 21", intended to be electrically coupled and connected to the first electric contacts 20', 20" of said first interconnection means 8.

Suitably, the first electric contacts 20 of the first interconnection means 8, and the second electric contacts 21 of the interconnection means 12, can be divided between one or more connectors, depending on the number of windings 30 of the alternator 6.

The configuration of the connections between said second electric contacts 21', 21" and said first electric contacts 20', 20", and between the second electric contacts 21', 21" themselves, enables the voltage fed to the input of the electronic conversion system 14 to be varied (and hence optimized), as is therefore the voltage available at its output.

In particular, as is apparent from the two ensuing examples, the second component 10 presents a different configuration of the connections defined between the second electric contacts 21', 21" of the second interconnection means 12, depending on the value of the required voltage at the output connector 16.

For example, if a low voltage is required at the output connector 16, to achieve a good conversion efficiency the first electric contacts 20', 20" connected to the windings 30 of the alternator 6 should be connected such as to provide as input to the electronic conversion system 14 an input voltage, preferably three-phase, having a peak value substantially close to that of the required output voltage at the connector 16.

In particular, in this case the first electric contacts 20', 20" of the windings 30 of the alternator 6 are combined in such a manner as to be connected in parallel and, in greater detail, all the initial ends 31 of the windings 30 are carried to a first group 20' of electric contacts, while all the terminal ends 32 of the windings 30 are carried to a second group of electric contacts 20".

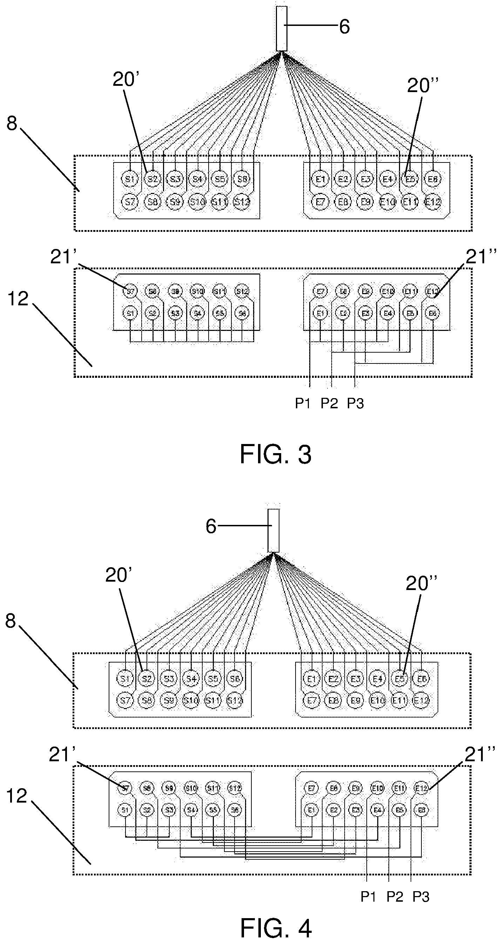

As shown in Figure 3, the second interconnection means 12 comprise:
- a first group of second electric contacts 21' which is complementary to the first group of contacts 20' of the first means 8 and is configured such as to short-circuit together all the initial ends 31 of the windings 30, and
- a second group of second electric contacts 21" which is complementary to the second group of contacts 20" of the first means 8 and is configured such as to set in parallel all the corresponding phases of the stator 19 of the multi-pole permanent magnet alternator 6.

Hence in this manner, the phases P1, P2 and P3 obtained at the second group of electric contacts 21" provide, as input to the electronic conversion system 14, a voltage which is optimal for generating a low voltage as output.

Likewise, to obtain a high output voltage at the connector 16, the first electric contacts 20' and 20" of the first connection means 8 are connected to the windings 30 of the alternator 6 as in the preceding case. In particularly, all the initial ends 31 of the windings 30 are carried to the first group of electric contacts 20', while all the final ends 32 of the windings 30 are carried to the second group of electric contacts 20".

That which varies compared with the preceding case is however the arrangement of the electric contacts 21 of the second means 12 (see Figure 4). In particularly, the electric contacts 21' of the first group are configured such as to short-circuit together only the contacts S1, S2 and S3 of the stator 19 and, together with the electric contacts 21" of the second group, are configured to set in series all the corresponding phases of the stator 19 of the multi-pole permanent magnet alternator 6. Hence in this manner, the phases P1, P2 and P3 obtained at the second group of electric contacts 21" provide, as input to the electronic conversion system 14, a voltage which is optimal for generating a high voltage as output.

Essentially, to obtain at the output connector 16 a high voltage value or a low voltage value, or any other voltage value between these, or to obtain mutually independent voltage values, the same first component 2 is always used, whereas the second component 10 varies according to the required voltage at the connector 16. In greater detail, the specificity of the second component 10 derives from the configuration of the connections between the electric contacts 21 of the second interconnection means 12.

Furthermore, independently of the characteristics of the second component 10, the power of the electricity generated at its output by the motor generator 1, at the output connector 16, always corresponds substantially to the rated mechanical power of the motor 4 of the first component 2.

The auxiliary signals 7 relative to the functionality of the endothermic motor 4 or relative to the motor generator control are also fed to the electronic conversion system 14 via the connection between the electric contacts 20', 20" of the first interconnection means 8 and the electric contacts 21', 21" of the second interconnection means 12. The electronic conversion system 14 of the second elements 10 again suitably comprises the same type of control as said auxiliary signals 7 such as to always obtain the same control setting for the motor generator 1, independently of the second component 10 used by the final user.

Advantageously, the stator 19 of the permanent magnet alternator 6 can present further windings (not represented) in order to generate auxiliary voltages.

For example, these further windings can be provided on the main windings 30 and can also involve several teeth together. Preferably, these auxiliary voltages are used to charge a possible battery provided in the first component 2 for the purpose of electrically starting the endothermic motor 4 when required.

The initial and terminal ends of the auxiliary windings can be connected to the first electric contacts 20', 20" of the first interconnection means 8 to enable access thereto from the outside, or can be disconnected from first contacts to be used exclusively inside the first component 2.

Advantageously, the electronic conversion system 14 of the second component 10 is provided with its own cooling elements 15 (for example fins) orientated such as to utilize the air flow fed by the fan of the first component 2, which is normally used to cool the endothermic motor 4. In particular, the fan of the first component 2 can be disposed and configured such as to draw in external air and feed it towards the second component 10 in such a manner as to make it pass through the cooling elements 15 associated with the electronic conversion system 14.

From the aforegoing, the motor generator according to the invention is shown to be particularly advantageous in that, being divided into two elements, it is simpler to transport and, moreover, enables the final user to generate several types of output voltages without having to forcibly acquire several complete motor generators. For example, the final user can acquire a second component suitable for generating an AC voltage output, and another second component suitable for generating a DC voltage output, and can then connect them at different times to the same first component containing the endothermic motor.

Moreover, in this manner, the final user can acquire a single first component provided with the most suitable motor for actual use and can then combine this (and hence acquire) the most suitable second components for the particular and multiple future needs of the user. In the same manner, if the final user wishes to change motor type, only a new first component has to be acquired, as the second component or components previously acquired are usable with different first components. Moreover, if one of the two components is damaged, the final user need acquire or replace only the damaged component, while maintaining in use the still properly operating component.

Furthermore, the motor generator according to the present invention is economically advantageous even for the producer, in that the producer can construct a large quantity of identical unique first components suitable for all world markets while at the same time constructing different types of second components, each of which is specific for a certain output voltage and hence for a specific geographical area of use.

The present invention also relates to an electricity production system able to generate both a single-phase voltage and a three-phase voltage.

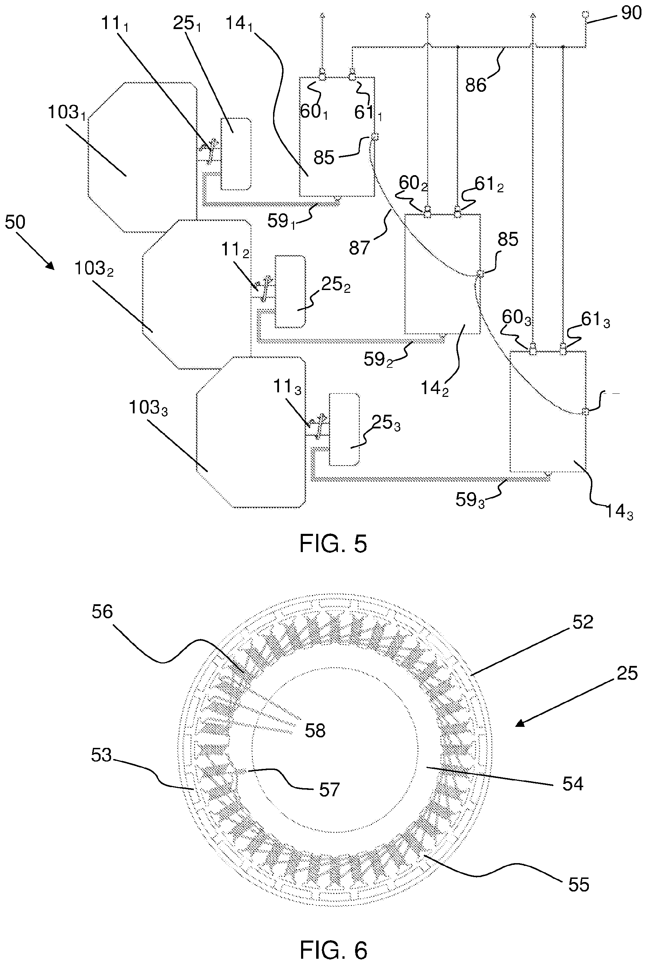

In a first embodiment, shown in Figure 5, the system 50 comprises a combination of three motor generators 1 each of which comprises its own motor 103₁, 103₂ 103₃ (hereinafter 103ᵢ), its own electrical alternator 25₁, 25₂ 25₃ (hereinafter 25ᵢ) and its own electronic conversion unit 14₁, 14₂ 14₃ (hereinafter 14ᵢ).

Each electrical alternator 25ᵢ is coupled directly to the transmission shaft of the corresponding motor 103ᵢ and is preferably a permanent magnet multi-pole alternator of the type shown in Figure 2. Advantageously, the system 50 can comprise three first components 2ᵢ and three second components 10ᵢ; in greater detail, in this case each first component 2ᵢ comprises a first containment structure 100ᵢ for a motor 103ᵢ and an electrical alternator 25ᵢ and is provided with first interconnection means 8ᵢ which can be mechanically coupled with and electronically connected to the interconnection means 12ᵢ of the corresponding second component 10ᵢ, which comprises a second containment structure 102ᵢ for one of the three electronic conversion units 14₁, 14₂ 14₃. Essentially, each of the three motor generators 1ᵢ comprises a first component 2ᵢ and a second component 10ᵢ of the previously described type, each presenting first interconnection means 8ᵢ and second interconnection means 12ᵢ of the previously described type.

Alternatively, each of the three motor generators can comprise a single containment structure (without interconnection means) housing internally the motor 103ᵢ the electrical alternator 25ᵢ and the corresponding electronic conversion unit 14ᵢ. In this case, each electrical alternator 25ᵢ can be of the type shown in Figure 6. In greater detail, in this case, each alternator 25ᵢ comprises an external rotor 52 provided with a plurality of permanent magnets 53, and a stator 54 provided with a plurality of teeth 55 facing said magnets 53. On each tooth 55 of the stator 54 a winding is disposed, connected to the other windings such as to form a single three-phase power circuit 56. In particular, the three initial ends 57 of this winding 56 are short-circuited together, while the three terminal ends 58 are connected, via their own cable 59ᵢ to the corresponding electronic conversion unit 14ᵢ.

In greater detail, in the first embodiment of the system 50, the stator 54 of each of the three permanent magnet alternators 25₁, 25₂ 25₃ is connected to the corresponding electronic conversion unit 14₁, 14₂ 14₃ by its own cable 59ᵢ, 59₂ and 59₃ (see Figure 5).

Each electronic conversion unit 14ᵢ is configured to convert generic voltages at variable frequency, generated by the three-phase circuit 56 of the corresponding alternator 6ᵢ, into a standard single-phase output voltage (for example 230 VAC 50Hz). In particular, each electronic conversion unit 14ᵢ comprises two output contacts, 60ᵢ and 61ᵢ, which represent respectively the line contact and the neutral contact for the output voltage.

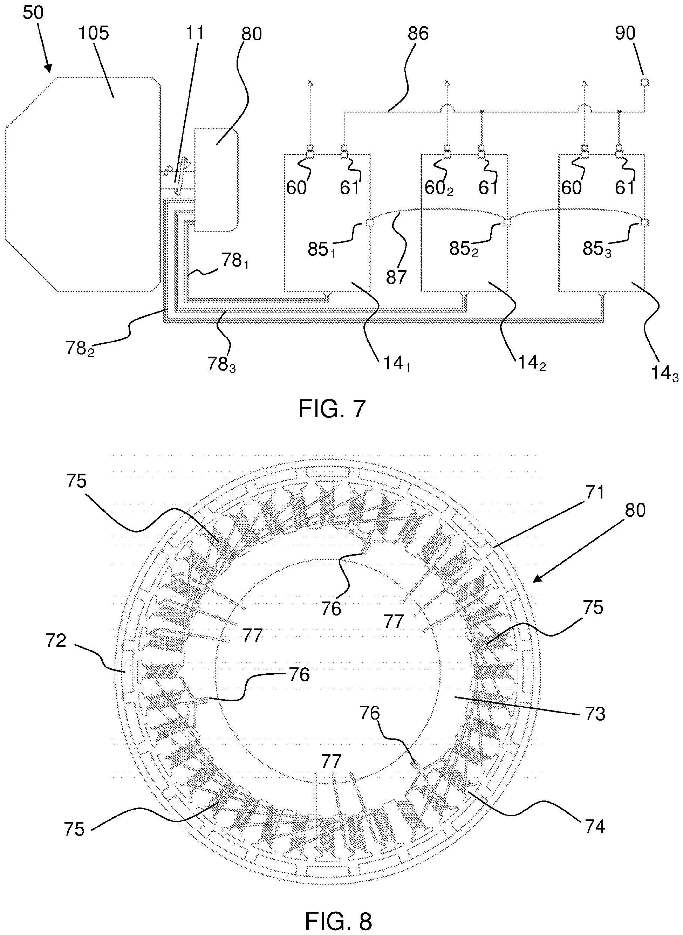

In a second embodiment, shown in Figure 7, the system 50 comprises a motor generator 1 with a single motor 105, a corresponding electric alternator 80, and three electronic conversion units 14₁, 14₂ 14₃.

The electric alternator 80 is coupled directly to the transmission shaft of the motor 105 and is, preferably, a permanent magnet multi-pole alternator of the type shown in Figure 2.

Advantageously, the system 50 can comprise a single first component 2 and three second components 10ᵢ; in greater detail, said first component 2 comprises a first containment structure 100 for the motor 105 and alternator 80 and is provided with first interconnection means 8 which can be mechanically coupled with and electronically connected to the interconnection means 12ᵢ of the three second components 10ᵢ, each of which comprises a second containment structure 102ᵢ for one of the three electronic conversion units 14₁, 14₂ 14₃. Essentially, in this case, a single motor generator 1 is provided comprising a first component 2 and three second components 10 of the aforedescribed type, each of which presents respectively first interconnection means 8 and second interconnection means 12ᵢ of the aforedescribed type.

Alternatively, the motor generator can comprise a single containment structure (without interconnection means) internally housing the motor 105, the alternator 80 and the three electronic conversion units 14ᵢ. In this case the electric alternator 80 suitably presents a number of teeth suitable to divide it into three galvanically isolated three-phase windings, it being preferably of the type represented in Figure 8.

In greater detail, the alternator 80 comprises a rotor 71, provided with a plurality of permanent magnets 72, and a stator 73 provided with a plurality of teeth 74 facing said magnets 72.

A winding 75 is disposed on each tooth 74 of the stator 73, the various windings being connected such as to form three three-phase circuits, respectively 75₁, 75₂ and 75₃ (hereinafter 75ᵢ), which are similar but are galvanically isolated from each other. In particular, the three initial ends 76 of each circuit 75ᵢ are electrically connected together, while the three terminal ends 77 of each circuit 75ᵢ are connected via their own cable 78ᵢ to the corresponding electronic conversion unit 14ᵢ.

In greater detail, in the second embodiment of the system 50, the stator 73 of the single alternator 80 is connected to the three electronic conversion units 14₁, 14₂, 14₃ by thee cables 78₁, 78₂ and 78₃, each of which is connected to the three terminations 77 of the three circuits 75ᵢ.

In this embodiment, each of the electronic conversion units 14ᵢ is configured to convert the generic variable frequency voltages, produced by a single three-phase circuit 75ᵢ of the alternator 80, into a single-phase standard voltage (for example 230 VAC 50 Hz), available at the output across the contacts 60ᵢ and 61ᵢ, which represent respectively the line contact and neutral contact for the output voltage.

In both the embodiments, the neutral contacts 61₁, 61₂ and 61₃ at the output of the three electronic conversion units 14₁, 14₂, 14₃ are connected together by a cable 86 to form the common neutral reference 90.

Furthermore, in both the embodiments, the three electronic units 14₁, 14₂, 14₃ present the same characteristics. Preferably, the three electronic units 14₁, 14₂, 14₃ are mutually identical.

The system 50 also comprises means for connecting together the three electronic conversion units 14₁, 14₂, 14₃. In particular, these means can comprise a cable 87 insertable into a corresponding connector 85₁, 85₂, 85₃ provided in each of said units, or can comprise wireless transmission systems.

The system also suitably comprises means for controlling/setting the system operation, and in particular for defining and setting the type of voltage to be generated as output from the system 50, i.e. whether three-phase or single-phase type.

In addition, the system also comprises means for differentiating between the three electronic conversion units 14ᵢ, by assigning uniquely to one of them (defined hereinafter as the "dominant unit") the task of controlling the operation of the other two (defined hereinafter as "dependent unit 1" and "dependent unit 2").

Preferably, the same cable 87 used to connect the three electronic conversion units 14ᵢ together can be used (for example by inserting suitable connectors) for setting the method of system operation, and for differentiating between the three electronic conversion units 14ᵢ.

Preferably, the three electronic conversion units 14₁, 14₂, 14₃ are connected together and communicate with each other directly, however, according to a variant, not represented herein, said units can be connected together and mutually synchronized by a central electronic supervising and control unit (not represented) which interfaces individually with each of said three electronic units 14₁, 14₂, 14₃.

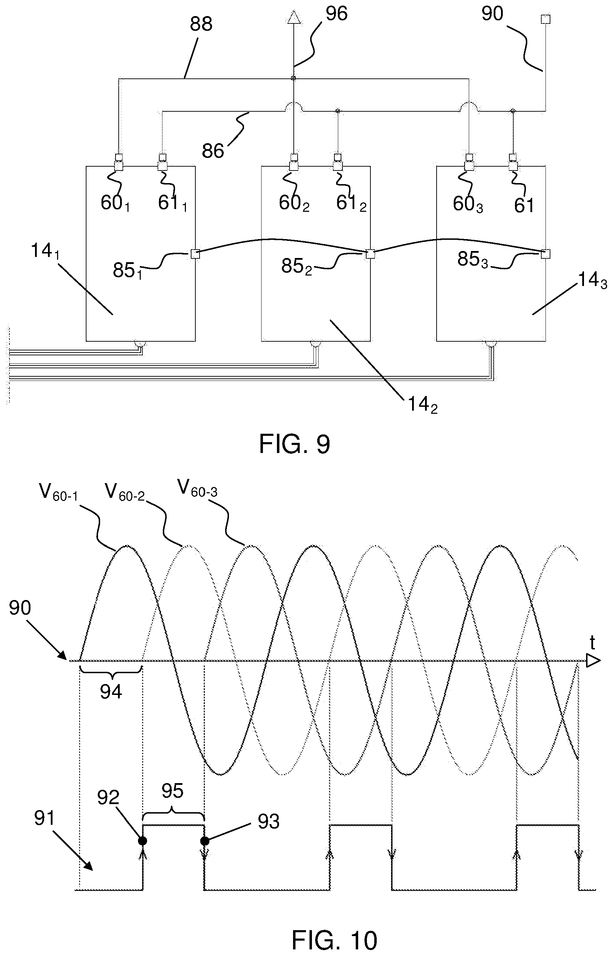

The system 50, in both its embodiments, provides two modes of operation: one for generating a standard three-phase voltage output (see Figures 5 and 7) and one for generating a standard single-phase voltage output (see Figure 9).

In both operating modes, the cable 87 is suitable connected to the corresponding connectors 85ᵢ such that the electronic conversion unit 14₁ acquires the role of "dominant", the electronic conversion unit 14₂ that of "dependent 1" and the electronic conversion unit 14₃ that of "dependent 2".

Once the user has selected by an external control (for example present on the control panel), the first operating mode (i.e. that suitable for generating a standard three-phase voltage output), the three motors 103ᵢ are started (in the case of the system 50 of the first embodiment) or the single motor 105 (in the case of the system 50 of the second embodiment). The "dominant" electronic conversion unit 14₁ then begins to generate the voltage V₆₀₋₁ across its output terminals 60₁ and 61₁, and at the same time feeds via the cable 87 or via a wireless connection a synchronization signal 91 to the other electronic units 14₂ and 14₃.

In the first operating mode (see Figure 10), the electronic conversion unit 14₂ is programmed to begin to generate the voltage V₆₀₋₂ across its output terminals 60₂ and 61₂, against the rising edge 92 of the synchronization signal 91, while the electronic conversion unit 14₃ is programmed to begin to generate the voltage V₆₀₋₃ across its output terminals 60₃ and 61₃, against the falling edge 93 of the synchronization signal 91.

In this operating mode (see Figure 10), the synchronization signal 91 is generated such that the time 94 between passage of the voltage V₆₀₋₁ through zero (i.e. with respect to the reference 90) and the rising edge 92 is of 120 electrical degrees, and that the time 95 between the rising edge 92 and the falling edge 93 is also of 120 electrical degrees.

In this manner, the system 50 provides a standard three-phase voltage (in this case of 400 Vac 50Hz) across the terminals 60₁, 60₂ and 60₃ of the three electronic units 14ᵢ.

In the second operating mode (i.e. that suitable for generating a single-phase output voltage) represented in Figure 9, the output terminals 60₁, 60₂ and 60₃ of the three electronic conversion units 14₁, 14₂, 14₃ are connected together by a further cable 88.

Once the user has selected by an external control (for example present on the control panel), the second operating mode (i.e. that suitable for generating a single-phase voltage output), the three motors 103ᵢ are started (in the case of the system 50 of the first embodiment) or the single motor 105 (in the case of the system 50 of the second embodiment).

The "dominant" electronic conversion unit 14₁ then begins to generate the voltage V₆₀₋₁ across its output terminals 60₁ and 61₁, and at the same time feeds a synchronization signal 97 to the other two electronic units 14₂ and 14₃.via the cable 87 or via a wireless connection.

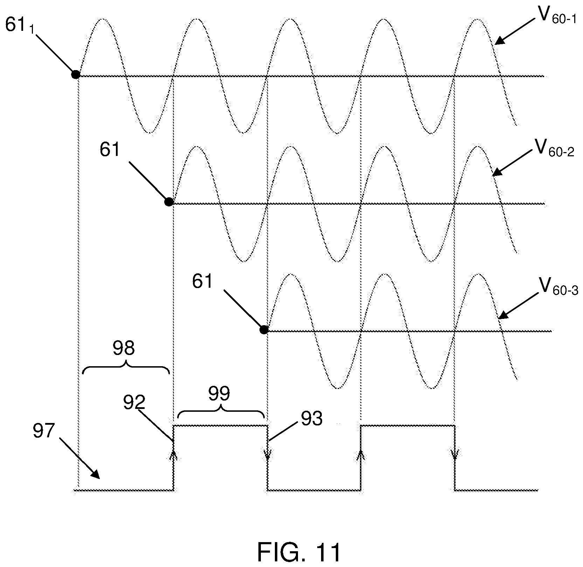

Again in this second operating mode (see Figure 11), the electronic conversion unit 14₂ is programmed to begin to generate the voltage V₆₀₋₂ across its output terminals 60₂ and 61₂, against the rising edge 92 of the synchronization signal 97, while the electronic conversion unit 14₃ is programmed to begin to generate the voltage V₆₀₋₃ across its output terminals 60₃ and 61₃, against the falling edge 93 of the synchronization signal 97.

However, in this second operating mode, the synchronization signal 97 is generated such that the time 98 between passage of the voltage V₆₀₋₁ through zero (i.e. with respect to the reference 90) and the rising edge 92 is of 180 electrical degrees, and that the time between the rising edge 92 and the falling edge 93 is of 180 electrical degrees.

The standard single-phase voltages V₆₀₋₂ and V₆₀₋₃ generated respectively by the electronic units 14₂ and 14₃ are added to the voltage V₆₀₋₁ generated by the "dominant" electronic conversion unit 14₁ to obtain at the output terminal 96 a standard single-phase voltage of power equal to three times that deliverable by the single electronic conversion unit 14.

Preferably, the system 50 is portable and can be assembled on site, at the moment of use.

The system according to the invention is particularly advantageous in that:
- the power of the deliverable single-phase voltage is not one third of the three-phase, but is substantially equal thereto,
- it is flexible, economical, and is particularly suitable for situations in which the use of three-phase voltage is required only for certain time periods, while for the remaining periods a single-phase voltage of equal power is required,
- it is easier to transport and control given that it consists of the combination of three single motor generators rather than one heavy voluminous assembly.

## Claims

1. A motor generator (1) for electricity production, comprising:
- a first component (2) with a first containment structure (100) for a motor (4) and for a permanent magnet alternator (6) mechanically connected to said motor (4), said first containment structure comprising first interconnection means (8) electrically connected to the windings of said alternator (6),
- a second component (10) with a second containment structure (102) for an electronic system (14) adapted to convert the electricity received as input, said containment structure comprising at least one output connector (16) connected to the output of said electronic conversion system (14) and second interconnection means (12) connected to the input of said electronic conversion system (14),
and in that
- said first interconnection means (8) of said first containment structure (100) can be mechanically coupled to said interconnection means (12) of said second containment structure (102),
- said first interconnection means (8) comprise first electric contacts, electrically connectable to second electric contacts defined in said second interconnection means (12) to transfer the electricity, generated by the alternator (6) of said first component (2), to the input of the electronic conversion system (14) of said second component (10),
- said electric contacts of said first interconnection means (8) are accessible from the outside and said windings of said alternator (6) are electrically connected to said first electric contacts,
- the configuration of the electrical connections of said second electric contacts of said second interconnection means (12) is defined on the basis of the characteristics of the electricity desired by the user at the output of said motor generator (1),_wherein the configuration of the connections between said second electric contacts (21', 21") and said first electric contacts (20', 20"), and between the second electric contacts (21', 21") themselves, enables the voltage fed to the input of the electronic conversion system (14) to be varied,
- said at least one output connector (16) is arranged to render the final electricity desired by the user accessible from the outside of said second containment structure (102).

2. A motor generator as claimed in claim 1, **characterised in that** the configuration of said first electric contacts of said first interconnection means (12) is independent of the electricity desired by the user at the output of said motor generator (1).

3. A motor generator as claimed in one or more of the preceding claims, **characterised by** comprising a first component (2) and a plurality of second components (10) of different types, which can be coupled at different times and on the basis of specific user requirements, to said first component (2).

4. A motor generator as claimed in one or more of the preceding claims, **characterised by** comprising a second component (10) which can be coupled at different times and on the basis of specific user requirements, to first components (2) of different types, related to a different type of motor (4) and/or alternator (6).

5. A motor generator as claimed in one or more of the preceding claims, **characterised in that**, independently of the characteristics of the second component (10), the power of the electricity at its output connector (16) always substantially corresponds to the rated mechanical power of said motor (4) of said first component (2).

6. A motor generator as claimed in one or more of the preceding claims, **characterised in that** said first interconnection means (8) are accessible from the outside of said first containment structure (100).

7. A motor generator as claimed in one or more of the preceding claims, **characterised in that** said second interconnection means (12) are accessible from the outside of said second containment structure (102).

8. A motor generator as claimed in one or more of the preceding claims, **characterised in that** said first interconnection means (8) are defined at the outer surface of said first containment structure (100), and/or said second interconnection means (12) are defined at the outer surface of said second containment structure (102).

9. A motor generator as claimed in one or more of the preceding claims, **characterised in that** said first interconnection means (8) are arranged to receive auxiliary electric signals (7) relative to parameters of the motor (4) and/or relative to the control of the motor generator.

10. A motor generator as claimed in one or more of the preceding claims, **characterised in that** said auxiliary electric signals (7) are transmitted to said electronic conversion system (14) of said second component (10) via the electrical connection between the first electric contacts of said first interconnection means (8) and the second electric contacts of said second interconnection means (12).

11. A motor generator as claimed in one or more of the preceding claims, **characterised in that** said electronic conversion system (14) of said second component (10) comprises a unit for organizing said auxiliary electric signals (7).

12. A motor generator as claimed in one or more of the preceding claims, **characterised in that**, independently of the electricity desired by the user at the output connector (16), the electronic conversion system (14) always provides the same type of organization of said auxiliary electric signals (7) such as to always have the same motor generator control setting, independently of the type of second component (10) used.

13. A motor generator as claimed in one or more of the preceding claims, **characterised in that** said alternator (6) comprises further windings intended to generate auxiliary voltages, said further windings not being accessible from the outside of said first containment structure and not being connected to said first electric contacts of said first interconnection means (8).

14. A motor generator as claimed in one or more of the preceding claims, **characterised in that** said alternator (6) comprises secondary windings for generating auxiliary voltages for feeding a battery provided in said first component (2) inside said first containment structure (100).

15. A motor generator as claimed in one or more of the preceding claims, **characterised in that** the electronic conversion system (14) of said second component (10) comprises cooling elements (15) orientated such as to convey towards said system the air flow fed by a fan provided in said first component (2) for cooling said motor (4).

## Patentansprüche

1. Motorgenerator (1) zur Produktion von Elektrizität, umfassend:
- eine erste Komponente (2) mit einer ersten Eingrenzungsstruktur (100) für einen Motor (4) und für einen Dauermagnetwechselstromerzeuger (6), der mechanisch mit dem Motor (4) verbunden ist, wobei die erste Eingrenzungsstruktur ein erstes Verbindungsmittel (8) umfasst, das elektrisch mit den Wicklungen des Wechselstromerzeugers (6) verbunden ist,
- eine zweite Komponente (10) mit einer zweiten Eingrenzungsstruktur (102) für ein elektronisches System (14), das angepasst ist, um die als Eingang empfangene Elektrizität umzuformen, wobei die Eingrenzungsstruktur wenigstens einen Ausgangsanschluss (16), der mit dem Ausgang des elektronischen Umformungssystems (14) verbunden ist, und ein zweites Verbindungsmittel (12), das mit dem Eingang des elektronischen Umformungssystems (14) verbunden ist, umfasst,
und wobei
- das erste Verbindungsmittel (8) der ersten Eingrenzungsstruktur (100) mechanisch an das Verbindungsmittel (12) der zweiten Eingrenzungsstruktur (102) gekoppelt sein kann,
- das erste Verbindungsmittel (8) erste elektrische Kontakte umfasst, die elektrisch mit zweiten elektrischen Kontakten verbindbar sind, die in dem zweiten Verbindungsmittel (12) definiert sind, um die durch den Wechselstromerzeuger (6) der ersten Komponente (2) erzeugte Elektrizität an den Eingang des elektronischen Umformungssystems (14) der zweiten Komponente (10) zu übertragen,
- die elektrischen Kontakte des ersten Verbindungsmittels (8) von der Außenseite zugänglich sind und die Wicklungen des Wechselstromerzeugers (6) elektrisch mit den ersten elektrischen Kontakten verbunden sind,
- die Konfiguration der elektrischen Verbindungen der zweiten elektrischen Kontakte des zweiten Verbindungsmittels (12) basierend auf den Eigenschaften der vom Benutzer am Ausgang des Motorgenerators (1) gewünschten Elektrizität definiert ist, wobei es die Konfiguration der Verbindungen zwischen den zweiten elektrischen Kontakten (21', 21") und den ersten elektrischen Kontakten (20', 20") und zwischen den zweiten elektrischen Kontakten (21', 21") selbst ermöglicht, die dem Eingang des elektronischen Umformungssystems (14) zugeführte Spannung zu variieren,
- der wenigstens eine Ausgangsanschluss (16) angeordnet ist, um die vom Benutzer gewünschte Endelektrizität von der Außenseite der zweiten Eingrenzungsstruktur (102) zugänglich zu machen.

2. Motorgenerator nach Anspruch 1, **dadurch gekennzeichnet, dass** die Konfiguration der ersten elektrischen Kontakte des ersten Verbindungsmittels (12) unabhängig von der vom Benutzer am Ausgang des Motorgenerators (1) gewünschten Elektrizität ist.

3. Motorgenerator nach einem oder mehreren der vorhergehenden Ansprüche, **gekennzeichnet durch** ein Umfassen einer ersten Komponente (2) und einer Vielzahl von zweiten Komponenten (10) von verschiedenen Typen, die zu verschiedenen Zeiten und basierend auf spezifischen Benutzeranforderungen an die erste Komponente (2) gekoppelt werden können.

4. Motorgenerator nach einem oder mehreren der vorhergehenden Ansprüche, **gekennzeichnet durch** ein Umfassen einer zweiten Komponente (10), die zu verschiedenen Zeiten und basierend auf spezifischen Benutzeranforderungen an erste Komponenten (2) von verschiedenen Typen gekoppelt werden kann und die im Zusammenhang mit einem anderen Typ von Motor (4) und/oder Wechselstromerzeuger (6) steht.

5. Motorgenerator nach einem oder mehreren der vorhergehenden Ansprüche, **dadurch gekennzeichnet, dass**, unabhängig von den Eigenschaften der zweiten Komponente (10), die Leistung der Elektrizität an deren Ausgangsanschluss (16) immer im Wesentlichen der mechanischen Nennleistung des Motors (4) der ersten Komponente (2) entspricht.

6. Motorgenerator nach einem oder mehreren der vorhergehenden Ansprüche, **dadurch gekennzeichnet, dass** das erste Verbindungsmittel (8) von der Außenseite der ersten Eingrenzungsstruktur (100) zugänglich ist.

7. Motorgenerator nach einem oder mehreren der vorhergehenden Ansprüche, **dadurch gekennzeichnet, dass** das zweite Verbindungsmittel (12) von der Außenseite der zweiten Eingrenzungsstruktur (102) zugänglich ist.

8. Motorgenerator nach einem oder mehreren der vorhergehenden Ansprüche, **dadurch gekennzeichnet, dass** das erste Verbindungsmittel (8) an der Außenoberfläche der ersten Eingrenzungsstruktur (100) definiert ist und/oder das zweite Verbindungsmittel (12) an der Außenoberfläche der zweiten Eingrenzungsstruktur (102) definiert ist.

9. Motorgenerator nach einem oder mehreren der vorhergehenden Ansprüche, **dadurch gekennzeichnet, dass** das erste Verbindungsmittel (8) angeordnet ist, um elektrische Hilfssignale (7) bezogen auf Parameter des Motors (4) und/oder bezogen auf die Steuerung des Motorgenerators zu empfangen.

10. Motorgenerator nach einem oder mehreren der vorhergehenden Ansprüche, **dadurch gekennzeichnet, dass** die elektrischen Hilfssignale (7) über die elektrische Verbindung zwischen den ersten elektrischen Kontakten des ersten Verbindungsmittels (8) und den zweiten elektrischen Kontakten des zweiten Verbindungsmittels (12) auf das elektronische Umformungssystem (14) der zweiten Komponente (10) übertragen werden.

11. Motorgenerator nach einem oder mehreren der vorhergehenden Ansprüche, **dadurch gekennzeichnet, dass** das elektronische Umformungssystem (14) der zweiten Komponente (10) eine Einheit zum Organisieren der elektrischen Hilfssignale (7) umfasst.

12. Motorgenerator nach einem oder mehreren der vorhergehenden Ansprüche, **dadurch gekennzeichnet, dass** das elektronische Umformungssystem (14), unabhängig von der vom Benutzer am Ausgangsanschluss (16) gewünschten Elektrizität, immer den gleichen Typ von Organisation der elektrischen Hilfssignale (7) bereitstellt, sodass unabhängig von dem verwendeten Typ der zweiten Komponente (10) immer die gleiche Motorgeneratorsteuerungseinstellung besteht.

13. Motorgenerator nach einem oder mehreren der vorhergehenden Ansprüche, **dadurch gekennzeichnet, dass** der Wechselstromerzeuger (6) weitere Wicklungen umfasst, die Hilfsspannungen erzeugen sollen, wobei die weiteren Wicklungen nicht von der Außenseite der ersten Eingrenzungsstruktur zugänglich sind und nicht mit den ersten elektrischen Kontakten des ersten Verbindungsmittels (8) verbunden sind.

14. Motorgenerator nach einem oder mehreren der vorhergehenden Ansprüche, **dadurch gekennzeichnet, dass** der Wechselstromerzeuger (6) Sekundärwicklungen zum Erzeugen von Hilfsspannungen zum Speisen einer Batterie umfasst, die in der ersten Komponente (2) innerhalb der ersten Eingrenzungsstruktur (100) bereitgestellt wird.

15. Motorgenerator nach einem oder mehreren der vorhergehenden Ansprüche, **dadurch gekennzeichnet, dass** das elektronische Umformungssystem (14) der zweiten Komponente (10) Kühlelemente (15) umfasst, die derart ausgerichtet sind, dass sie den von einem in der ersten Komponente (2) zum Kühlen des Motors (4) bereitgestellten Lüfter zugeführten Luftstrom in Richtung des Systems befördern.

## Revendications

1. Un moteur-générateur (1) pour la production d'électricité comprenant :
- un premier élément (2) doté d'une première structure de confinement (100) pour un moteur (4) et pour un alternateur à aimant permanent (6) relié mécaniquement audit moteur (4), ladite première structure de confinement comprenant des premiers moyens d'interconnexion (8) connectés électriquement aux enroulements dudit alternateur (6),
- un deuxième élément (10) doté d'une seconde structure de confinement (102) pour un système électronique (14) conçu pour convertir l'électricité reçue en entrée, ladite structure de confinement comprenant au moins un connecteur de sortie (16) connecté à la sortie dudit système de conversion électronique (14) et des seconds moyens d'interconnexion (12) connectés à l'entrée dudit système de conversion électronique (14),
et en ce que
- lesdits premiers moyens d'interconnexion (8) de ladite première structure de confinement (100) peuvent être mécaniquement couplés auxdits moyens d'interconnexion (12) de ladite seconde structure de confinement (102),
- lesdits premiers moyens d'interconnexion (8) comprennent des premiers contacts électriques, pouvant être connectés électriquement à des seconds contacts électriques définis dans lesdits seconds moyens d'interconnexion (12) pour transférer l'électricité, générée par l'alternateur (6) dudit premier élément (2), vers l'entrée du système de conversion électronique (14) dudit second élément (10),
- lesdits contacts électriques desdits premiers moyens d'interconnexion (8) sont accessibles depuis l'extérieur et lesdits enroulements dudit alternateur (6) sont connectés électriquement auxdits premiers contacts électriques,
- la configuration des connexions électriques desdits seconds contacts électriques desdits seconds moyens d'interconnexion (12) est définie sur la base des caractéristiques de l'électricité souhaitée par l'utilisateur au niveau de la sortie dudit moteur-générateur (1), où la configuration des connections entre lesdits seconds contacts électriques (21' et 21") et lesdits premiers contacts électriques (20' et 20"), et entre les seconds contacts électriques (21' et 21 ") eux-mêmes, permet à la tension alimentée à l'entrée du système de conversion électronique (14) d'être variée,
- ledit au moins un connecteur de sortie (16) est agencé de façon à rendre l'électricité finale souhaitée par l'utilisateur accessible depuis l'extérieur de ladite seconde structure de confinement (102).

2. Un moteur-générateur selon la revendication 1, **caractérisé en ce que** la configuration desdits premiers contacts électriques desdits moyens d'interconnexion (12) est indépendante de l'électricité souhaitée par l'utilisateur à la sortie dudit moteur-générateur (1).

3. Un moteur-générateur selon l'une ou plusieurs des revendications précédentes, **caractérisé en ce qu'**il comprend un premier élément (2) et une pluralité de seconds éléments (10) de différents types, pouvant être couplés à différents moments sur la base d'exigences utilisateur spécifiques, sur ledit premier élément (2).

4. Un moteur-générateur selon l'une ou plusieurs des revendications précédentes, **caractérisé en ce qu'**il comprend un second élément (10) pouvant être couplé à différents moments sur la base d'exigences utilisateur spécifiques, sur les premiers éléments (2) de différents types, associés à un différent type de moteur (4) et/ou alternateur (6).

5. Un moteur-générateur selon l'une ou plusieurs des revendications précédentes, **caractérisé en ce que**, indépendamment des caractéristiques du second élément (10), la puissance de l'électricité à son connecteur de sortie (16) répond toujours sensiblement à la puissance mécanique nominale dudit moteur (4) dudit premier élément (2).

6. Un moteur-générateur selon l'une ou plusieurs des revendications précédentes, **caractérisé en ce que** lesdits premiers moyens d'interconnexion (8) sont accessibles de l'extérieur de ladite première structure de confinement (100).

7. Un moteur-générateur selon l'une ou plusieurs des revendications précédentes, **caractérisé en ce que** lesdits seconds moyens d'interconnexion (12) sont accessibles de l'extérieur de ladite seconde structure de confinement (102).

8. Un moteur-générateur selon l'une ou plusieurs des revendications précédentes, **caractérisé en ce que** lesdits premiers moyens d'interconnexion (8) sont définis sur la surface extérieure de ladite première structure de confinement (100), et/ou lesdits seconds moyens d'interconnexion (12) sont définis sur la surface extérieure de ladite seconde structure de confinement (102).

9. Un moteur-générateur selon l'une ou plusieurs des revendications précédentes, **caractérisé en ce que** lesdits premiers moyens d'interconnexion (8) sont agencés de façon à recevoir des signaux électriques auxiliaires (7) en lien avec les paramètres du moteur (4) et/ou en lien avec la commande du moteur-générateur.

10. Un moteur-générateur selon l'une ou plusieurs des revendications précédentes, **caractérisé en ce que** lesdits signaux électriques auxiliaires (7) sont transmis audit système de conversion électronique (14) dudit second composant (10) par l'intermédiaire de la connexion électrique entre les premiers contacts électriques desdits premiers moyens d'interconnexion (8) et les seconds contacts électriques desdits seconds moyens d'interconnexion (12).

11. Un moteur-générateur selon l'une ou plusieurs des revendications précédentes, **caractérisé en ce que** ledit système de conversion électronique (14) dudit second composant (10) comprend une unité pour organiser lesdits signaux électriques auxiliaires (7).

12. Un moteur-générateur selon l'une ou plusieurs des revendications précédentes, **caractérisé en ce que**, indépendamment de l'électricité souhaitée par l'utilisateur au connecteur de sortie (16), le système de conversion électronique (14) fournit toujours le même type d'organisation desdits signaux électriques auxiliaires (7) de sorte d'avoir constamment le même réglage du moteur-générateur, indépendamment du type de second composant (10) utilisé.

13. Un moteur-générateur selon l'une ou plusieurs des revendications précédentes, **caractérisé en ce que** ledit alternateur (6) comprend des enroulements supplémentaires prévus pour générer des tensions auxiliaires, lesdits enroulements supplémentaires n'étant pas accessibles de l'extérieur de ladite première structure de confinement et n'étant pas connectés auxdits premiers contacts électriques desdits premiers moyens d'interconnexion (8).

14. Un moteur-générateur selon l'une ou plusieurs des revendications précédentes, **caractérisé en ce que** ledit alternateur (6) comprend des enroulements secondaires pour générer des tensions auxiliaires de sorte à alimenter une batterie installée dans ledit premier élément (2) à l'intérieur de ladite première structure de confinement (100).

15. Un moteur-générateur selon l'une ou plusieurs des revendications précédentes, **caractérisé en ce que** le système de conversion électronique (14) dudit second élément (10) comprend des éléments de refroidissement (15) orientés de manière à acheminer vers ledit système le flux d'air alimenté par un ventilateur installé dans ledit premier élément (2) pour refroidir ledit moteur (4).
